# EUROPÄISCHE PATENTANMELDUNG

(11) **EP 3 882 475 A1**
(43) Veröffentlichungstag der Anmeldung: **22.09.2021**
(21) Anmeldenummer: 21159813.1
(22) Anmeldetag: 01.03.2021
(51) Int. Cl.: F16B 13/00

(54) **GIPSKARTONDÜBEL UND KOMBINATION DES GIPSKARTONDÜBELS MIT EINEM BOHR- UND DREHWERKZEUG**

(30) Priorität: 17.03.2020 DE 102020107225
(71) Anmelder: fischerwerke GmbH & Co. KG, 72178 Waldachtal (DE)
(72) Erfinder: Frey, Christian, 72250 Freudenstadt-Wittlensweiler (DE); Dixa, Raphael, 72178 Waldachtal (DE)
(74) Vertreter: Suchy, Ulrich Johannes

(57) **Zusammenfassung**

Zu einem leichteren Einschrauben eines Gipskartondübels (1) schlägt die Erfindung eine sich von einer Windung bis zu einer nächsten Windung in einer Längsrichtung des Gipskartondübels (1) erstreckende Schneide (11) an einem Umfang eines Gewindekerns (3) des Gipskartondübels (1) vor.

## Beschreibung

Die Erfindung betrifft einen Gipskartondübel mit den Merkmalen des Oberbegriffs des Anspruchs 1 und eine Kombination des Gipskartondübels mit einem Bohr- und Drehwerkzeug. Gipskartondübel sind Einschraubhülsen, die zu einem Einschrauben in Gipskartonplatten oder andere Leichtbaustoffe mit vergleichbar geringer Festigkeit vorgesehen sind. Sie weisen ein spezielles Gewinde auf, das sich ein Gegengewinde in Gips oder andere Leichtbaustoffe selbst schneidet und das radial hoch ist, um eine große Gewindeflanke als Haltefläche zu haben. Zur Befestigung eines Gegenstands weisen Gipskartondübel ein axiales Loch zum Einschrauben beispielsweise einer Holzschraube auf.

Die internationale Patentanmeldung WO 92/10 687 offenbart einen Gipskartondübel mit einem in Leichtbaustoffen wie Gips selbstschneidenden Gewinde, einem das Gewinde durchsetzenden Gewindekern und einem axialen Durchgangsloch, das einen kreuzförmigen Querschnitt als Gegenprofil für ein Bohr- und Drehwerkzeug aufweist. Der kreuzförmige Querschnitt ist in einer Richtung so breit wie eine streifenförmige Klinge des Bohr- und Drehwerkzeugs und in einer anderen Richtung schmaler. Zu einem Drehantrieb wird die Klinge des Bohr- und Drehwerkzeugs durch das axiale Durchgangsloch des Gipskartondübels durchgesteckt, so dass die Klinge an einem vorderen Ende aus dem Gipskartondübel vorsteht. Die streifenförmige Klinge ist durch Formschluss drehfest in dem kreuzförmigen axialen Durchgangsloch des Gipskartondübels. Zu ihrem aus dem Gipskartondübel vorstehenden vorderen Ende hin wird die Klinge schmaler, so dass sie einen Bohrer bildet, der ein Loch für den Gewindekern des Gipskartondübels in einem Leichtbaustoff wie Gips bohrt.

Aufgabe der Erfindung ist, einen Gipskartondübel der vorstehend erläuterten Art mit einem verbesserten Einschraubverhalten vorzuschlagen.

Diese Aufgabe wird erfindungsgemäß durch einen Gipskartondübel mit den Merkmalen des Anspruchs 1 sowie durch eine Kombination des Gipskartondübels mit einem Bohr- und Drehwerkzeug mit den Merkmalen des Anspruchs 8 gelöst.

Der erfindungsgemäße Gipskartondübel weist ein in Leichtbaustoffen wie Gipskarton selbstschneidendes Gewinde und einen hohlen Gewindekern, der das Gewinde durchsetzt, auf. Der Außendurchmesser des Gipskartondübels ist um mindestens den Faktor 1,4 bis 1,5, insbesondere um mindestens den Faktor 1,7 größer als der Durchmesser des Gewindekerns. Durch den Gewindekern geht ein axiales Durchgangsloch zum Durchstecken eines Bohr- und Drehwerkzeugs durch, das ein Gegenprofil für das Bohr- und Drehwerkzeug aufweist. Das Bohr- und Drehwerkzeug weist einen Schaft mit einem Profil auf, der durch Formschluss drehfest in dem Gegenprofil des axialen Durchgangslochs des Gipskartondübels ist. Der Schaft des Bohr- und Drehwerkzeugs ist so in das axiale Durchgangsloch im Kern des Gipskartondübels steckbar, dass er an einem vorderen Ende aus dem Gipskartondübel vorsteht. Das "vordere Ende" des Gipskartondübels ist das Ende, das beim Eindrehen des Gipskartondübels in eine Gipskartonplatte als erstes in die Gipskartonplatte eindringt. Dieses Ende ist in Einbringrichtung vorne. An dem aus dem Gipskartondübel vorne vorstehenden vorderen Ende des Bohr- und Drehwerkzeugs weist der Schaft des Bohr- und Drehwerkzeugs einen Bohrer auf oder das vordere Ende des Bohr- und Drehwerkzeugs ist zum Bohren eines Lochs in einen Leichtbaustoff wie Gipskarton ausgebildet. Das Bohr- und Drehwerkzeug ist kein Teil des Gipskartondübels, es ist ihm allerdings insoweit zugeordnet, als es zum Bohren eines Lochs für den Gewindekern des Gipskartondübels und zu einem Drehantrieb zum Einschrauben des Gipskartondübels in einen Leichtbaustoff wie Gipskarton dient. Die Bezeichnung als "Drehwerkzeug" bezieht sich auf die Eignung zum Drehantrieb des Gipskartondübels.

Der Gewindekern des erfindungsgemäßen Gipskartondübels weist drei axial hintereinander angeordnete Abschnitte auf, die unmittelbar aneinander anschließen oder zwischen denen sich weitere Abschnitte befinden können. Ein dritter Abschnitt der drei Abschnitte weist einen größeren Durchmesser auf als ein erster Abschnitt der drei Abschnitte. Der erste Abschnitt ist in Einbringrichtung vor dem dritten Abschnitt angeordnet und dringt somit beim planmäßigen Eindrehen des Gipskartondübels in einen Leichtbaustoff vor dem dritten Abschnitt in den Baustoff ein. Der zweite Abschnitt ist zwischen dem ersten und dem dritten Abschnitt angeordnet.

Erfindungsgemäß weist der zweite Abschnitt der drei Abschnitte des Gewindekerns eine Schneide an einem Umfang des Gewindekerns auf, die in einer Längsrichtung des Gewindekerns verläuft. Die Schneide kann achsparallel, beziehungsweise in einer Axialebene des Gewindekerns, oder auch in einem - vorzugsweise spitzen - Winkel zu der Axialebene beispielsweise wendelförmig verlaufen. Die Schneide im zweiten Abschnitt des Gewindekerns ist vergleichbar beispielsweise mit einer Umfangsschneide eines Fräsers. Sie dient bei einem Einschrauben des Gipskartondübels in den Leichtbaustoff zu einem Aufweiten eines Lochs, das mit dem Bohr- und Drehwerkzeug in einen Leichtbaustoff gebohrt worden ist. Dadurch lässt sich der Gipskartondübel mit einem niedrigeren Drehmoment in den Leichtbaustoff einschrauben und/oder es lässt sich der Gewindekern des Gipskartondübels mit einem größeren Durchmesser im dritten Abschnitt ausbilden, wodurch der Gewindekern bruchfester ist.

Die Schneide im zweiten Abschnitt des Gewindekerns des erfindungsgemäßen Gipskartondübels befindet sich radial außerhalb eines Umfangs des Gewindekerns im ersten Abschnitt, damit sie beim Einschrauben das zuvor mit dem Bohr- und Drehwerkzeug gebohrte Loch, das den Durchmesser des Gewindekerns im ersten Abschnitt aufweist, aufweitet. Außerdem befindet sich die Schneide radial nicht außerhalb und vorzugsweise innerhalb eines Umfangs des Gewindekerns im dritten Abschnitt, damit sie das Loch nicht auf einen größeren Durchmesser und vorzugsweise auf einen kleineren Durchmesser als dem des Gewindekerns im dritten Abschnitt aufweitet.

Damit das Bohr- und Drehwerkzeug das Loch mit dem Durchmesser des Gewindekerns im ersten und/oder im zweiten Abschnitt bohren kann, ist bei einer Ausführung der Erfindung das axiale Durchgangsloch, das das Gegenprofil für das Bohr- und Drehwerkzeug aufweist, im ersten und/oder im zweiten Abschnitt des Gewindekerns am Umfang des Gewindekerns offen. Insbesondere ist das axiale Durchgangsloch an zwei gegenüberliegenden Umfangsstellen des Gewindekerns im ersten und/oder im zweiten Abschnitt offen. Bei einer Ausgestaltung der Erfindung, bei der das axiale Durchgangsloch am Umfang des Gewindekerns im zweiten Abschnitt offen ist, ist die Schneide am Übergang von dem axialen Durchgangsloch zum Umfang des Gewindekerns ausgebildet, insbesondere indem der Übergang vom axialen Durchgangsloch zum Umfang des Gewindekerns als spitzwinklige Kante, 90°-Kante oder auch als stumpfwinklige Kante ausgebildet ist. Die Schneide befindet sich in Umfangsrichtung gesehen auf einer in einer Drehrichtung beim Einschrauben des Gipskartondübels nachlaufenden Seite der Öffnung des axialen Durchgangslochs. Mit anderen Worten ist die Schneide so angeordnet, dass sie beim Einschrauben in Drehrichtung gerichtet ist um schneiden zu können. Auf der in Umfangsrichtung gegenüberliegenden, beim Eindrehen vorlaufenden Seite der Öffnung des axialen Durchgangslochs befindet sich der Umfang des Gewindekerns im zweiten Abschnitt vorzugsweise radial weiter innen als die Schneide.

Eine Ausgestaltung der Erfindung sieht vor, dass ein Radius der Umfangsfläche des Gewindekerns im zweiten Abschnitt ausgehend von der Schneide entgegen der Einschraubrichtung, in die der Gipskartondübel zum Einbringen in den Baustoff gedreht wird, des Gipskartondübels abnimmt, damit die Umfangsfläche in der Drehrichtung beim Einschrauben nachlaufend hinter der Schneide einen Abstand von einer Lochwand aufweist. Die Schneide ist sozusagen die radial äußerste Stelle am Umfang des Gewindekerns im zweiten Abschnitt.

Ein Radius des Gewindekerns im dritten Abschnitt ist vorzugsweise größer als ein radialer Abstand der Schneide von der Achse des Gewindekerns, so dass der dritte Abschnitt des Gewindekerns das Loch in dem Leichtbaustoff weiter aufweitet und den Leichtbaustoff an einer Lochwandung verdichtet, was eine Festigkeit des Leichtbaustoffs an der Lochwandung erhöht und einen Halt des Gipskartondübels im Leichtbaustoff verbessert.

Vorzugsweise ist ein Durchmesser des Gewindekerns des erfindungsgemäßen Gipskartondübels im ersten Abschnitt so groß wie eine größte Breite des axialen Durchgangslochs, so dass das axiale Durchgangsloch im ersten Abschnitt des Gewindekerns an zwei gegenüberliegenden Umfangsstellen offen ist. Das ermöglicht ein Bohr- und Drehwerkzeug mit einem Schaft, der so breit ist wie der Durchmesser des Gewindekerns im ersten Abschnitt. Das heißt, dass mit dem Bohr- und Drehwerkzeug ein Loch mit dem Durchmesser des Gewindekerns im ersten Abschnitt gebohrt werden kann.

Vorzugsweise befindet sich die Schneide radial gesehen innerhalb eines Außendurchmessers von an die Schneide angrenzenden Windungen des Gewindes des erfindungsgemäßen Gipskartondübels, so dass die Schneide das Loch auf einen kleineren Durchmesser als dem Außendurchmesser des Gewindes aufweitet. Vorzugsweise wird das Loch von der Schneide nur um einen Bruchteil einer Höhe der Windungen des Gewindes aufgeweitet.

Die Schneide erstreckt sich bei Ausgestaltungen der Erfindung in axialer Richtung von einer Windung zu einer nächsten Windung des Gewindes. Anders ausgedrückt verbindet die Schneide in einem Axialschnitt zwei aufeinanderfolgende Windungen beziehungsweise Gewindeflanken.

Der Anspruch 8 ist auf eine Kombination des vorstehend beschriebenen Gipskartondübels mit einem Bohr- und Drehwerkzeug, wie es ebenfalls vorstehend beschrieben worden ist und das zum Bohren eines Lochs in einen Leichtbaustoff wie Gips und zu einem Drehantrieb zum Einschrauben des Gipskartondübels in den Leichtbaustoff dient, gerichtet.

Eine Ausgestaltung der Erfindung sieht ein Bohr- und Drehwerkzeug mit einem Schaft vor, der ein Profil aufweist, das, wenn es sich in dem axialen Durchgangsloch des Gipskartondübels befindet, durch Formschluss drehfest mit dem axialen Durchgangsloch ist. Insbesondere ist das Profil des Schafts des Bohr- und Drehwerkzeugs komplementär zum Gegenprofil oder zu einem Teil des Gegenprofils des axialen Durchgangslochs. Der Schaft ist vorzugsweise länger als der Gipskartondübel, damit er sich so in das Durchgangsloch stecken lässt, dass er vorn aus dem Gipskartondübel vorsteht, um das Loch bohren zu können. Am vorderen Ende ist der Schaft des Bohr- und Drehwerkzeugs vorzugsweise als Bohrer ausgebildet, weist also beispielsweise eine oder mehrere Bohrschneiden auf oder ist jedenfalls so ausgebildet, dass er bei einem Drehantrieb das Loch in den Leichtbaustoff bohrt.

Insbesondere weist das Bohr- und Drehwerkzeug eine streifenförmige Klinge als Schaft auf, die zur Bildung des Bohrers zu ihrem vorderen Ende hin schmäler wird. Eine solche streifenförmige Klinge ist zum einen preiswert aus einem streifenförmigen Metallprofil herstellbar und weist zum anderen einen Formschluss in Drehrichtung in einem axialen Durchgangsloch mit einem kreuzförmigen Gegenprofil auf.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: einen erfindungsgemäßen Gipskartondübel in perspektivischer Darstellung;
- Figur 2: den Gipskartondübel aus Figur 1 in Seitenansicht;
- Figur 3: einen Achsschnitt des Gipskartondübels aus Figuren 1 und 2;
- Figur 4: ein Bohr- und Drehwerkzeug gemäß der Erfindung für den Gipskartondübel aus Figuren 1 bis 3; und
- Figur 5: einen Querschnitt des Gipskartondübels aus Figuren 1 bis 3 entlang Linie V-V in Figur 2.

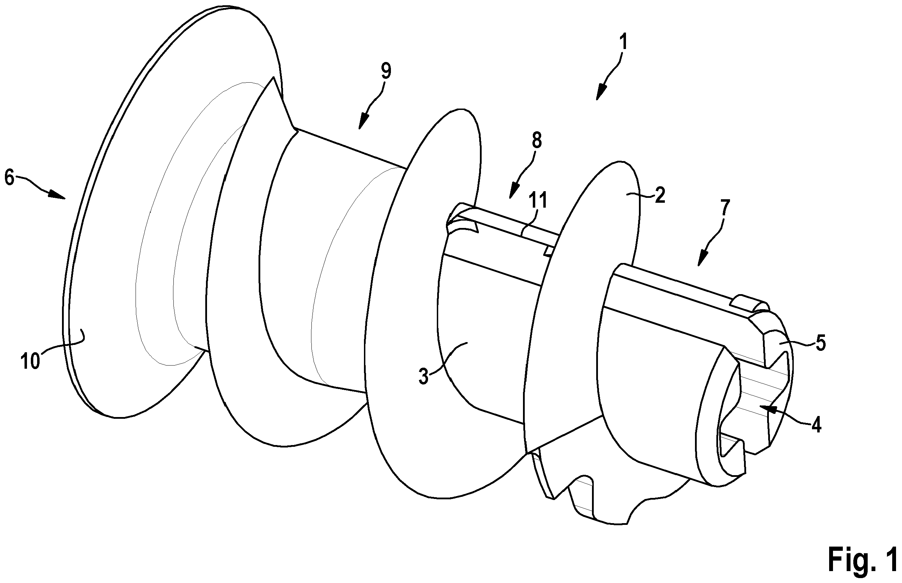

Der in Figuren 1 bis 3 dargestellte, erfindungsgemäße Gipskartondübel 1 besteht im Ausführungsbeispiel aus Kunststoff, kann allerdings auch aus einem anderen Werkstoff wie beispielsweise Metall hergestellt sein. Er ist zum Einschrauben in eine nicht dargestellte Gipskartonplatte oder allgemein in einen Leichtbaustoff mit einer ähnlich niedrigen Festigkeit wie Gips vorgesehen.

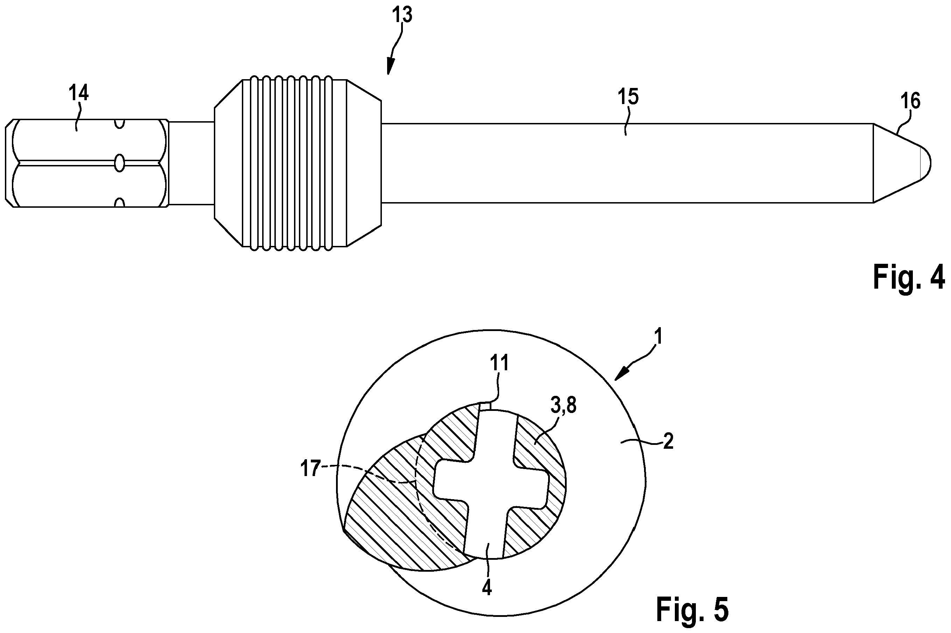

Der Gipskartondübel 1 weist ein in Leichtbaustoffe wie Gips selbstschneidendes Gewinde 2 und einen Gewindekern 3, der das Gewinde 2 durchsetzt, auf. Den Gewindekern 3 durchsetzt ein axiales Durchgangsloch 4, das an einem vorderen Ende 5 und an einem hinteren Ende 6 des Gewindekerns 3 beziehungsweise des Gipskartondübels 1 offen ist. Das axiale Durchgangsloch 4 weist, wie in Figur 1 und insbesondere in Figur 5 zu sehen ist, einen kreuzförmigen Querschnitt auf, der hier als Gegenprofil für ein noch zu erläuterndes Bohr- und Drehwerkzeug 13 bezeichnet wird. Das kreuzförmige Gegenprofil weist verschieden große Erstreckungen in seinen beiden Richtungen auf.

Der Gewindekern 3 weist drei axial hintereinander angeordnete Abschnitte 7, 8, 9 auf, die auch als Abschnitte 7, 8, 9 des Gipskartondübels 1 aufgefasst werden können. Ein erster Abschnitt 7 der drei Abschnitte 7, 8, 9 beginnt beziehungsweise endet am vorderen Ende 5 des Gewindekerns 3 beziehungsweise des Gipskartondübels 1 und ein dritter Abschnitt 9 der drei Abschnitte 7, 8, 9 endet beziehungsweise beginnt am hinteren Ende 6 des Gewindekerns 3 beziehungsweise des Gipskartondübels 1. Im dritten Abschnitt 9 weist der Gewindekern 3 einen größeren Durchmesser als im ersten Abschnitt 7 auf. Im ersten Abschnitt 7 und im dritten Abschnitt 9 weist der Gewindekern 3 einen kreisförmigen Außenumfang und in dem dazwischen befindlichen zweiten Abschnitt 8 einen näherungsweise kreisförmigen Außenumfang auf.

Am hinteren Ende 6 weist der Gipskartondübel 1 einen scheibenförmigen Radialflansch 10 auf, durch den das axiale Durchgangsloch 4 durchgeht.

Im ersten Abschnitt 7 und im zweiten Abschnitt 8 ist das axiale Durchgangsloch 4 in einer größeren der beiden Erstreckungsrichtungen seines kreuzförmigen Gegenprofils so breit wie der Durchmesser des Gewindekerns 3, so dass das axiale Durchgangsloch 4 im ersten Abschnitt 7 und im zweiten Abschnitt 8 am Umfang des Gewindekerns 3 offen ist.

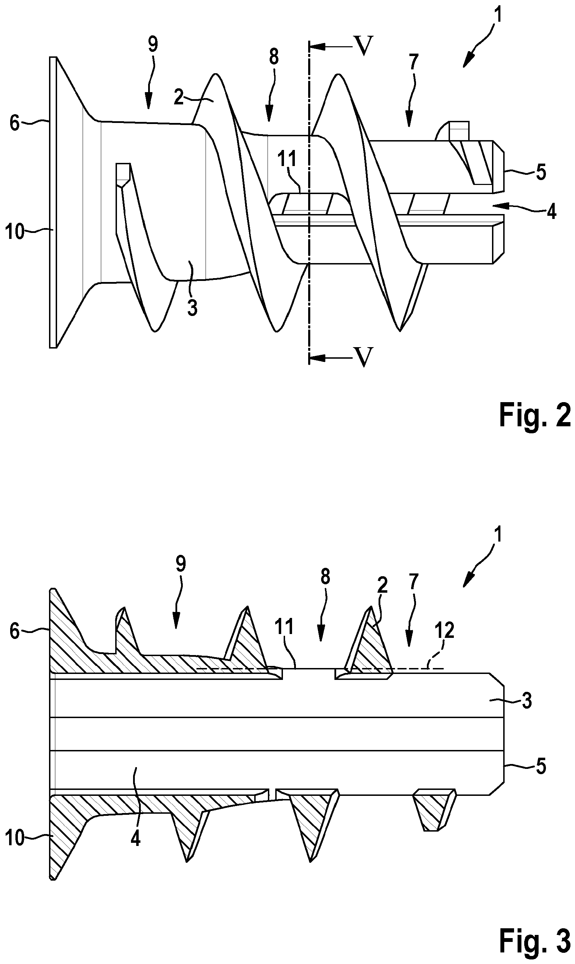

Im zweiten Abschnitt 8 weist der Gewindekern 3 des erfindungsgemäßen Gipskartondübels 1 eine achsparallele Schneide 11 auf, die sich von einer Windung zu einer nächsten Windung des Gewindes 2 erstreckt. Die Schneide 11 wird von einer Kante an einem Übergang von dem axialen Durchgangsloch 4, das im ersten Abschnitt 7 und im zweiten Abschnitt 8 an zwei gegenüberliegenden Umfangsstellen offen ist, zum Umfang des Gewindekerns 3 im zweiten Abschnitt 8 gebildet. Die Schneide 11 befindet sich an einer in einer Drehrichtung bei einem Einschrauben des Gipskartondübels 1 nachlaufenden Seite des Gegenprofils des axialen Durchgangslochs 4, so dass sie bei einem Einschrauben des Gipskartondübels 1 in einen Leichtbauwerkstoff wie Gips vergleichbar einer Umfangsschneide eines Fräsers Leichtbauwerkstoff abträgt. Die Schneide 11 bildet eine radial gesehen am weitesten außen befindliche Stelle des Umfangs des Gewindekerns 3 im zweiten Abschnitt 8. Die Schneide 11 befindet sich radial außerhalb des Umfangs des Gewindekerns 3 im ersten Abschnitt 7 und radial innerhalb des Umfangs des Gewindekerns 3 im dritten Abschnitt 9, was eine erste Strichlinie 12 in Figur 3 veranschaulicht. Die Schneide 11 befindet sich radial gesehen innerhalb eines Außendurchmessers der an die Schneide 11 angrenzenden Windungen des Gewindes 2, und zwar im Ausführungsbeispiel nahe an einem Gewindefuß beziehungsweise am Fuß der Gewindeflanken. Ausgehend von der Schneide 11 verkleinert sich der Umfang des Gewindekerns 3 im zweiten Abschnitt 8 in Umfangsrichtung in der Drehrichtung beim Einschrauben des Gipskartondübels 1. Im Ausführungsbeispiel weist der Gewindekern 3 im zweiten Abschnitt 8 eine Schneide 11 an einer Umfangsstelle auf, es sind allerdings auch Ausführungen mit mehreren Schneiden möglich, beispielsweise mit gegenüberliegende Schneiden an den Öffnungen des axialen Durchgangslochs 4 am Umfang des Gewindekerns 3 im zweiten Abschnitt 8 (nicht dargestellt).

Zum Einschrauben des Gipskartondübels 1 in einen Leichtbauwerkstoff wie Gips ist das in Figur 4 dargestellte Bohr- und Drehwerkzeug 13 vorgesehen, das zu seinem Drehantrieb mit beispielsweise einem nicht dargestellten Akkuschrauber ein Sechskant-Schrauberbit 14 zum Einsetzen in eine Schrauberbitaufnahme des Akkuschraubers aufweist. Das Bohr- und Drehwerkzeug 13 weist eine streifenförmige Klinge als Schaft 15 auf, die länger als der Gipskartondübel 1 beziehungsweise dessen Gewindekern 3 ist. Der Schaft 15 lässt sich vom hinteren Ende 6 in das axiale Durchgangsloch 4 im Gewindekern 3 des Gipskartondübels 1 einführen, so dass er am vorderen Ende 5 des Gipskartondübels 1 vorsteht. Zu seinem vorderen Ende hin wird der Schaft 15 schmaler, wodurch ein Bohrer 16 gebildet ist, mit dem sich bei einem Drehantrieb ein zylindrisches Loch in einen Leichtbauwerkstoff wie Gips bohren lässt. Der Schaft 15 ist so breit wie der Durchmesser des Gewindekerns 3 im ersten Abschnitt 7, so dass das gebohrte Loch den gleichen Durchmesser wie der Gewindekern 3 im ersten Abschnitt 7 aufweist. Figur 4 zeigt das Bohr- und Drehwerkzeug 13 in einem kleineren Maßstab als den Gipskartondübel 1 in Figuren 2 und 3, weswegen der Schaft 15 schmaler als der Druchmesser des Gewindekerns 3 im ersten Abschnitt zu sein scheint. Tatsächlich ist der Schaft 15 wie beschrieben so breit wie der Durchmesser des Gewindekerns 3 im ersten Abschnitt 7. Durch das zum Schaft 15 komplementäre Gegenprofil des axialen Durchgangslochs 4 ist der Gipskartondübel 1 durch Formschluss drehfest auf dem Schaft 15 des Bohr- und Drehwerkzeugs 13. In Figur 4 ist der Gewindekern 3 im zweiten Abschnitt 8 in einer Schnittfläche mit einer bogenförmigen, zweiten Strichlinie 17 abgegrenzt; die Schnittfläche außerhalb der zweiten Strichlinie 17 befindet sich im Gewinde 2.

Bei einem Drehantrieb des auf den Schaft 15 des Bohr- und Drehwerkzeugs 13 aufgesetzten Gipskartondübels 1 mit dem Bohr- und Drehwerkzeug 13 lässt sich der Gipskartondübel 1 in den Leichtbauwerkstoff einschrauben, indem der Bohrer 16 am vorderen, aus dem Gipskartondübel 1 vorstehenden Ende des Schafts 15 das zylindrische Loch bohrt. Beim Einschrauben schneidet das Gewinde 2 des Gipskartondübels 1 ein Gegengewinde in den Leichtbauwerkstoff. Die Schneide 11 vergrößert den Durchmesser des Lochs, was ein zum Einschrauben des Gipskartondübels 1 erforderliches Drehmoment verringert.

Aufgrund des größeren Durchmessers des Gewindekerns 3 im dritten Abschnitt 9 vergrößert der dritte Abschnitt 9 des Gewindekerns 3 das Loch in dem Leichtbauwerkstoff weiter und verdichtet dadurch den Leichtbauwerkstoff im Bereich einer Lochwandung, was eine Festigkeit des Leichtbauwerkstoffs im Bereich der Lochwandung erhöht und einen Halt des Gipskartondübels 1 verbessert.

Nachdem der Gipskartondübel 1 bis zu einem Anliegen oder Versenken des Radialflansches 10 an seinem hinteren Ende 6 an oder in dem Leichtbauwerkstoff eingeschraubt worden ist, wird das Bohr- und Drehwerkzeug 13 aus dem Gipskartondübel 1 herausgezogen und es lässt sich ein nicht dargestellter Gegenstand mit beispielsweise einer nicht dargestellten Holzschraube, die durch das hintere Ende 6 in das axiale Durchgangsloch 4 geschraubt wird, an dem Gipskartondübel 1 befestigen.

### Bezugszeichenliste

- 1: Gipskartondübel
- 2: Gewinde
- 3: Gewindekern
- 4: axiales Durchgangsloch
- 5: vorderes Ende
- 6: hinteres Ende
- 7: erster Abschnitt
- 8: zweiter Abschnitt
- 9: dritter Abschnitt
- 10: Radialflansch
- 11: Schneide
- 12: erste Strichlinie
- 13: Bohr- und Drehwerkzeug
- 14: Schrauberbit
- 15: Schaft
- 16: Bohrer
- 17: zweite Strichlinie

## Patentansprüche

1. Gipskartondübel, mit einem in Leichtbaustoffen wie Gips selbstschneidenden Gewinde (2) und mit einem hohlen Gewindekern (3), der das Gewinde (2) durchsetzt und der ein axiales Durchgangsloch (4) zum Durchstecken eines Bohr- und Drehwerkzeugs (13) mit einem Gegenprofil für das Bohr- und Drehwerkzeug (13) aufweist, wobei der Gewindekern (3) drei axial hintereinander angeordnete Abschnitte (7, 8, 9) aufweist, von denen ein dritter Abschnitt (9) einen größeren Durchmesser als ein erster Abschnitt (7) aufweist, **dadurch gekennzeichnet, dass** ein zweiter Abschnitt (8) des Gewindekerns (3) zwischen dem ersten und dem dritten Abschnitt (7, 9) eine in Längsrichtung des Gewindekerns (3) verlaufende Schneide (11) aufweist, die sich radial außerhalb eines Umfangs des Gewindekerns (3) im ersten Abschnitt (7) und radial nicht außerhalb des dritten Abschnitts (9) des Gewindekerns (3) befindet.

2. Gipskartondübel nach Anspruch 1, **dadurch gekennzeichnet, dass** das axiale Durchgangsloch (4) im zweiten Abschnitt (8) am Umfang des Gewindekerns (3) offen ist und zur Ausbildung der Schneide (11) sich eine in einer Drehrichtung beim Einschrauben des Gipskartondübels (1) nachlaufenden Kante an einem Übergang von dem Durchgangsloch (4) in einen Umfang des Gewindekerns (3) radial weiter außen befindet als der Umfang des zweiten Abschnitts (8) des Gewindekerns (3) auf einer in der Drehrichtung beim Einschrauben vorlaufenden Seite des Durchgangslochs (4), so dass die Kante die Schneide (11) bildet.

3. Gipskartondübel nach Anspruch 1 oder 2, **dadurch gekennzeichnet, dass** ein Radius einer Umfangsfläche des Gewindekerns (3) im zweiten Abschnitt (8) ausgehend von der Schneide (11) entgegen der Drehrichtung beim Einschrauben abnimmt.

4. Gipskartondübel nach einem oder mehreren der Ansprüche 1 bis 3, **dadurch gekennzeichnet, dass** ein Radius des dritten Abschnitts (9) des Gewindekerns (3) größer als ein radialer Abstand der Schneide (11) von der Achse des Gewindekerns (3) ist.

5. Gipskartondübel nach einem oder mehreren der vorhergehenden Ansprüche, **dadurch gekennzeichnet, dass** der Durchmesser des Gewindekerns (3) des Gipskartondübels (1) im ersten Abschnitt (7) so groß wie eine größte Breite des axialen Durchgangslochs (4) ist.

6. Gipskartondübel nach einem oder mehreren der vorhergehenden Ansprüche, **dadurch gekennzeichnet, dass** sich die Schneide (11) radial innerhalb eines Außendurchmessers an die Schneide (11) angrenzender Windungen des Gewindes (2) befindet.

7. Gipskartondübel nach einem oder mehreren der vorhergehenden Ansprüche, **dadurch gekennzeichnet, dass** die Schneide (11) sich von einer Windung zu einer nächsten Windung des Gewindes (2) erstreckt.

8. Kombination eines Gipskartondübels nach einem oder mehreren der vorhergehenden Ansprüche mit einem Bohr- und Drehwerkzeug, **dadurch gekennzeichnet, dass** das Bohr- und Drehwerkzeug (13) einen Schaft (15) aufweist, der ein Profil aufweist, das durch Formschluss drehfest in dem axialen Durchgangsloch (4) des Gipskartondübels (1) ist, der länger als der Gipskartondübel (1) ist und der einen Bohrer (16) an einem vorderen Ende aufweist.

9. Kombination nach Anspruch 8, **dadurch gekennzeichnet, dass** das Bohr- und Drehwerkzeug (13) eine streifenförmige Klinge als Schaft (15) aufweist, die zur Bildung des Bohrers (16) zu ihrem vorderen Ende hin schmäler wird.
